# FASCICULE DE BREVET EUROPEEN

(11) **EP 3 562 188 B1**
(45) Date de publication et mention de la délivrance du brevet: **13.10.2021**
(21) Numéro de dépôt: 19171248.8
(22) Date de dépôt: 26.04.2019
(51) Int. Cl.: H04W 12/06, H04W 4/06, H04W 24/04, H04W 76/18, H04W 76/50, H04W 4/90

(54) **PROCEDE DE CONFIGURATION POUR UN ACCES A DES SERVICES DE REPLI DE COMMUNICATION ET SYSTEME ASSOCIE**
EIN KONFIGURATIONSPROZESS UND EIN SYSTEM UM AUF RÜCKFALLKOMMUNIKATIONSDIENSTE ZUZUGREIFEN.
A CONFIGURATION PROCESS AND A SYSTEM FOR ACCESSING FALLBACK COMMUNICATION SERVICES

(30) Priorité: 27.04.2018 FR 1853739
(43) Date de publication de la demande: 30.10.2019
(73) Titulaire: Airbus DS SLC, 78990 Elancourt (FR)
(72) Inventeur: PATEROUR, Olivier, 78280 Guyancourt (FR)
(74) Mandataire: Cabinet Camus Lebkiri

(56) Documents cités:
- WO-A1-2016/122224
- "3rd Generation Partnership Project; Technical Specification Group Services and System Aspects; Study on application architecture to support Mission Critical Push To Talk over LTE (MCPTT) services (Release 13)", 3GPP STANDARD ; TECHNICAL REPORT ; 3GPP TR 23.779, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. V13.0.0, 25 septembre 2015 (2015-09-25), pages 1-251, XP051294333,
- SECRETARY TSG SA (MAURICE POPE ET AL: "Draft Report of TSG SA meeting #74", 3GPP DRAFT; SP-170002_REPORT_SA_74_DRAFT_V005RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA, no. Dubrovnik, Croatia; 20170308 - 20170310 4 mars 2017 (2017-03-04), XP051235206, Extrait de l'Internet: URL:http://www.3gpp.org/ftp/Meetings_3GPP_ SYNC/SA/Docs/ [extrait le 2017-03-04]

## Description

### DOMAINE TECHNIQUE DE L'INVENTION

Le domaine technique de l'invention est celui des procédures de repli pour permettre l'accès à des services de communication et plus précisément celui des procédures de repli pour permettre un accès à des services de communication s'appuyant sur un réseau de transport, l'accès aux services de communication nécessitant une authentification.

La présente invention concerne un procédé de configuration pour un accès à des services de repli de communication et en particulier un procédé de configuration pour un accès à des services de repli de communication accessibles via un réseau de transport, l'accès aux services de communication nécessitant une authentification.

La présente invention concerne également un système permettant la mise en œuvre d'un tel procédé.

### ARRIERE-PLAN TECHNOLOGIQUE DE L'INVENTION

Sur des réseaux privés comme les réseaux Tetra, TetraPol et P25 dédiés à la sécurité publique, il existe des procédures de repli permettant d'offrir un service minimum de communication à un utilisateur étant proche d'un relais ayant perdu sa connexion avec un réseau de communication central. En effet, le relais peut, soit maintenir les communications en cours sur le relais, soit utiliser une configuration par défaut, ce qui permet la communication entre tous les utilisateurs étant à proximité du relais. Un utilisateur en détresse peut donc demander du secours, les services de communication étant maintenus localement.

La norme 3GPP régissant les réseaux mobiles de type « Global System for Mobile Communications » ou GSM expose elle-aussi une procédure de repli appelée « Isolated E-UTRAN Operation for Public Safety » ou IOPS permettant à un nœud réseau de type « evolved Node B » ou eNB d'établir une communication avec un réseau local quand la communication avec le réseau central est perdue.

Or, dans certains réseaux de transport comme par exemple les réseaux mobiles GSM, un utilisateur doit être authentifié auprès d'un serveur d'authentification gérant l'accès aux services de communication proposés par le réseau, c'est-à-dire que les informations d'authentification de l'utilisateur doivent être trouvées dans une base de données d'utilisateurs à laquelle le serveur d'authentification a accès. Suite à la procédure de repli IOPS, le serveur d'authentification n'a accès qu'à une base de données d'utilisateurs locale qui ne contient généralement que des informations relatives à un nombre très réduit d'utilisateurs. Ainsi, de manière courante, l'authentification de l'utilisateur échoue et celui-ci ne peut avoir accès aux services de communication. L'échec ou le succès de l'authentification est donc conditionné par la localisation de l'utilisateur, ce qui n'est pas satisfaisant. Le document "3rd Génération Partnership Project; Technical Spécification Group Services and System Aspects; Study on application architecture to support Mission Critical Push To Talk over LTE (MCPTT) services (Release 13)",3GPP STANDARD; TECHNICAL REPORT; 3GPP TR 23.779, 3RD GENERATION PARTNERSHIP PROJECT (3GPP)" est un art antérieur pertinent dans le domaine de IOPS.

Il existe donc un besoin pour un utilisateur de pouvoir accéder, quelle que soit sa position, à des services de communication proposés via un réseau de transport n'ayant plus de connexion avec le réseau central correspondant, l'accès aux services de communication nécessitant une authentification.

### RESUME DE L'INVENTION

L'invention offre une solution aux problèmes évoqués précédemment, en permettant à un utilisateur connecté à un réseau de transport de pouvoir accéder à des services de repli de communication proposés via le réseau de transport, nécessitant une authentification, quelle que soit la localisation de cet utilisateur.

L'invention est définie dans les revendications indépendantes 1, 9, 11 et 12.

Un premier aspect de l'invention concerne un procédé de configuration pour un accès par un utilisateur à des services de repli de communication accessibles via un réseau de transport, l'accès aux services de repli de communication nécessitant une authentification, caractérisé en ce qu'il comporte les étapes suivantes :
- un client applicatif hébergé sur un équipement utilisateur envoie une requête d'authentification à un serveur de gestion d'identité ;
- en cas de rejet de la requête d'authentification par le serveur de gestion d'identité :
   - le serveur de gestion d'identité alloue un identifiant de repli unique à l'utilisateur et envoie l'identifiant de repli au client applicatif ;
   - le client applicatif envoie une requête de profil utilisateur de repli comportant l'identifiant de repli à un serveur de gestion de configuration et reçoit un profil utilisateur de repli correspondant envoyé par le serveur de gestion de configuration, l'utilisateur est alors authentifié « en mode repli » ;
   - le client applicatif envoie une requête de profils de groupe multimédia de repli comportant l'identifiant de repli à un serveur de gestion de groupes multimédias et reçoit au moins un profil de groupe multimédia de repli correspondant envoyé par le serveur de gestion de groupes multimédias ;
   - le client applicatif envoie une requête de clés de chiffrement de groupe multimédia de repli et de clés de chiffrement des communications privées comportant l'identifiant de repli à un serveur de gestion de clés de chiffrement et reçoit au moins une clé de chiffrement de groupe multimédia de repli et au moins une clé de chiffrement des communications privées correspondantes envoyées par le serveur de gestion de clés de chiffrement ;
   - une fois que le client applicatif a reçu le profil utilisateur de repli, le ou les profils de groupes multimédias de repli, la ou les clés de chiffrement de groupe multimédia de repli et la ou les clés de chiffrement des communications privées, l'utilisateur peut accéder à des services de repli de communication.

Grâce à l'invention, l'utilisateur dont l'authentification a échoué dans le cadre d'une procédure de repli peut tout de même accéder à des services de communication en utilisant un identifiant de repli lui permettant d'obtenir un profil utilisateur de repli, au moins un profil de groupe multimédia de repli, au moins une clé de chiffrement de groupe multimédia de repli et une clé de chiffrement des communications privées, les éléments de configuration nécessaires pour obtenir un accès à des groupes multimédias de repli proposant des services de repli de communication de groupe et pour établir des communications privées.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon un mode de réalisation, l'identifiant de repli est alloué de manière dynamique.

Ainsi, les identifiants de repli ne sont pas prévus à l'avance dans le serveur de gestion d'identité ce qui permet par exemple d'éviter une carence des identifiants de repli à allouer.

Selon un mode de réalisation pouvant être combiné au mode de réalisation précédent, une fois que le serveur de gestion d'identité a reçu la requête d'authentification envoyée par le client applicatif, le serveur de gestion d'identité réalise une étape de traitement de la requête d'authentification comportant les sous-étapes suivantes :
- le serveur de gestion d'identité demande au moins une information d'authentification à l'utilisateur ;
- l'utilisateur fournit l'information d'authentification demandée via l'équipement utilisateur ;
- le client applicatif envoie l'information d'authentification fournie par l'utilisateur au serveur de gestion d'identité et le serveur de gestion d'identité reçoit l'information d'authentification ;
- le serveur de gestion d'identité parcourt une base de données d'utilisateurs :
   ∘ si le serveur de gestion d'identité ne trouve pas l'information d'authentification dans la base de données d'utilisateurs, la requête d'authentification est rejetée ;
   ∘ si le serveur de gestion d'identité trouve l'information d'authentification dans la base de données d'utilisateurs, la requête d'authentification est acceptée.

Ainsi, le serveur de gestion applique un protocole standard d'authentification.

Selon un exemple de ce mode de réalisation, l'identifiant de repli est associé à l'information d'authentification fournie par l'utilisateur.

Ainsi, l'identifiant de repli est propre à l'utilisateur ce qui signifie qu'en cas de déconnexion et reconnexion, le même identifiant de repli est alloué à ce même utilisateur.

Selon un mode de réalisation pouvant être combiné aux modes de réalisation précédents, en cas d'acceptation de la requête d'authentification par le serveur de gestion d'identité, l'utilisateur est authentifié en « mode nominal » dans lequel il a accès à un profil utilisateur nominal et à des groupes multimédias nominaux que l'utilisateur a définis lui-même lors de précédentes connexions ou qu'un administrateur a défini pour lui.

Ainsi, si l'authentification est réussie, l'utilisateur a accès au profil utilisateur et aux groupes multimédias qu'il a lui-même choisis ou qu'un administrateur a défini pour lui dans le cadre d'une mission.

Selon un mode de réalisation pouvant être combiné aux modes de réalisation précédents, chaque utilisateur d'un groupe multimédia de repli communique avec les autres utilisateurs du groupe multimédia de repli.

Ainsi, un utilisateur authentifié en mode repli peut communiquer avec d'autres utilisateurs et a donc accès à des services de communication au sein de chaque groupe multimédia de repli.

Selon un exemple de ce mode de réalisation, lors d'une communication entre plusieurs utilisateurs, chaque utilisateur est identifié par son identifiant de repli qui est transmis et affiché sur un écran de l'équipement utilisateur de chaque autre utilisateur.

Ainsi, lors d'une conversation privée ou de groupe, un utilisateur peut, par exemple, facilement identifier la personne qui parle et le nombre de personnes participant à la conversation.

Selon un exemple de ce mode de réalisation et du mode de réalisation précédent pouvant être combiné à l'exemple précédent, les utilisateurs authentifiés en « mode nominal » et les utilisateurs authentifiés en « mode repli » ne peuvent pas communiquer entre eux.

Ainsi, comme les utilisateurs authentifiés en mode repli n'ont pas été authentifiés nominalement, la sécurité des données échangées par les utilisateurs authentifiés en mode nominal n'est pas mise en danger.

Selon un mode de réalisation pouvant être combiné aux modes de réalisation précédents, le profil utilisateur de repli comporte une liste d'identifiants de groupe multimédia de repli.

Ainsi, le profil utilisateur de repli est lié à une liste de groupes multimédias de repli auxquels l'utilisateur peut avoir accès.

Selon un exemple de ce mode de réalisation, le serveur de gestion de groupes multimédias envoie au client applicatif le profil de groupe multimédia de repli de chaque groupe multimédia de repli dont l'identifiant de groupe multimédia de repli est inclus dans la liste d'identifiants de groupe multimédia de repli.

Ainsi, l'utilisateur a accès aux groupes multimédias de repli auxquels son profil utilisateur de repli lui donne accès.

Selon un mode de réalisation pouvant être combiné aux modes de réalisation précédents, l'utilisateur est informé qu'il est en « mode repli » par affichage de l'identifiant de repli sur un écran de l'équipement utilisateur.

Ainsi, l'utilisateur est informé qu'il est authentifié mais qu'il n'aura pas accès à son profil utilisateur nominal.

Un second aspect de l'invention concerne un système pour la mise en œuvre du procédé selon un premier aspect de l'invention caractérisé en ce qu'il comporte :
- au moins un équipement utilisateur utilisé par un utilisateur, ledit équipement utilisateur hébergeant un client applicatif configuré pour envoyer des requêtes à des serveurs et obtenir des informations en provenance des serveurs ;
- au moins une base de données d'utilisateurs ;
- au moins un serveur de gestion d'identité configuré pour recevoir et traiter une requête d'authentification envoyée par un client applicatif, pour chercher des informations d'authentification dans une base de données d'utilisateurs et pour allouer un identifiant de repli unique à un utilisateur ;
- au moins un serveur de gestion de configuration configuré pour recevoir une requête de profil utilisateur de repli et envoyer un profil utilisateur de repli à un client applicatif ;
- au moins un serveur de gestion de groupes multimédias configuré pour recevoir une requête de profils de groupe multimédia de repli et envoyer au moins un profil de groupe multimédia de repli à un client applicatif ;
- au moins un serveur de gestion de clés de chiffrement configuré pour recevoir une requête de clés de chiffrement de groupe multimédia de repli et de clés de chiffrement des communications privées et envoyer au moins une clé de chiffrement de groupe multimédia de repli et une clé de chiffrement des communications privées à un client applicatif.

Selon un mode de réalisation, le système comporte un administrateur opérationnel configuré pour surveiller, sur les groupes multimédias de repli, l'activité des utilisateurs authentifiés en « mode repli », pour établir une communication avec des utilisateurs authentifiés en « mode repli » et pour mettre en relation des utilisateurs authentifiés en « mode repli » avec des utilisateurs authentifiés en « mode nominal ».

Ainsi, l'administrateur opérationnel peut par exemple identifier des utilisateurs malveillants authentifiés en mode repli ou permettre de mettre en relation un utilisateur de repli en détresse avec un groupe multimédia nominal pouvant lui apporter du secours.

Selon un mode de réalisation pouvant être combiné aux modes de réalisation précédents, le système est conforme à la norme 3GPP MCS.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant les principales étapes d'un procédé de configuration pour un accès à des services de repli de communication selon un premier aspect de l'invention.
- La figure 2 montre une représentation schématique d'un système selon un second aspect de l'invention mettant en œuvre le procédé selon un premier aspect de l'invention.
- La figure 3 illustre le rôle de l'administrateur opérationnel au sein du système selon un second aspect de l'invention.

### DESCRIPTION DETAILLEE D'AU MOINS UN MODE DE REALISATION DE L'INVENTION

Sauf précision contraire, un même élément apparaissant sur des figures différentes présente une référence unique.

Un premier aspect de l'invention concerne un procédé 100 de configuration pour un accès à des services de repli de communication accessibles via un réseau de transport, l'accès aux services de repli de communication nécessitant une authentification.

On entend par « services de repli », des services proposés par une procédure de repli.

Dans la présente demande, on entend par « procédure de repli », une procédure de secours mise en œuvre par un réseau de transport au niveau local quand la communication avec un réseau central correspondant est perdue, permettant d'offrir un service de communication minimum.

Le procédé selon un premier aspect de l'invention est mis en œuvre au niveau applicatif de manière que les services de communication s'appuient sur les moyens fournis par le réseau de transport. L'accès aux services de communication est alors conditionné par une authentification au niveau applicatif. On entend « par niveau applicatif » ou « partie applicative », ce qui est relatif à la couche application selon le modèle OSI ou « Open Systems Interconnection » qui concerne le point d'accès aux services proposés par un réseau.

Dans la présente demande, la partie applicative est décorrélée de la partie réseau de transport. Un tel réseau de transport est, par exemple, un réseau 5G, un réseau « Wireless Local Area Network » ou WLAN, un réseau SWAN « Satellite Wide Area Network » ou encore un réseau de transport de type GSM, comportant entre autres les réseaux de type « General Packet Radio Service » ou GPRS, « Enhanced Data Rates for GSM Evolution » ou EDGE, « Universal Mobile Télécommunications System » ou UMTS, « Long Term Evolution » ou LTE et LTE-Advanced.

Le réseau de transport peut être fixe, par exemple un réseau de transport couvrant une entreprise, ou tactique, c'est-à-dire mobile, utilisé, par exemple, dans le cas d'une mission des forces spéciales. Ainsi, si un utilisateur devant participer à une mission a une connexion déficiente au réseau central à cause du mauvais temps, il peut être authentifié en mode repli sur le réseau local.

On entend par « accès à des services de communication », un accès à des services liés à de la communication, par exemple l'accès à l'audio, à la vidéo, à une messagerie avec fichiers pour interagir avec un ou plusieurs utilisateurs ou encore à des services de localisation éventuellement enrichis, dans le cas d'une mission, d'informations, par exemple, sur le positionnement des utilisateurs ou de points d'intérêts. Les services de communication permettent d'établir des communications privées entre deux utilisateurs ou des communications de groupe entre les membres d'un groupe multimédia.

On entend par « groupe multimédia » un groupe virtuel regroupant plusieurs utilisateurs pouvant interagir entre eux une fois connectés via un serveur permettant l'accès au groupe multimédia.

Un second aspect de l'invention concerne un système 200 permettant la mise en œuvre du procédé 100 selon un premier aspect de l'invention.

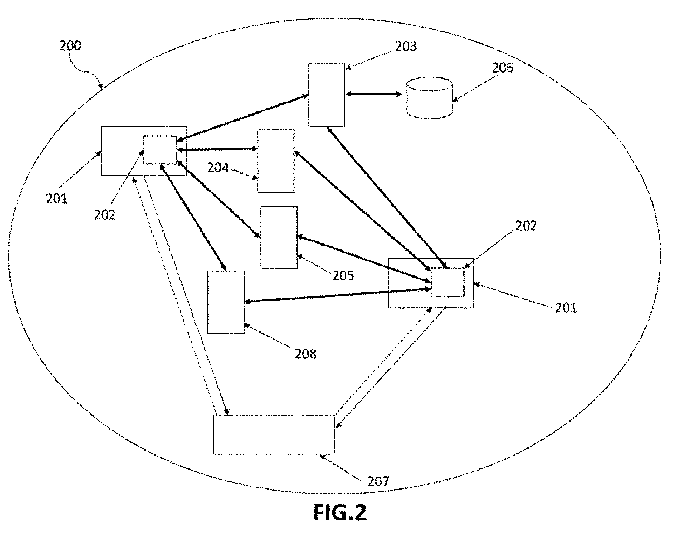

Le système 200, illustré à la figure 2, comporte deux équipements utilisateur 201, chacun hébergeant un client applicatif 202.

On entend par « client applicatif », un client informatique, c'est-à-dire un logiciel qui envoie des demandes ou requêtes à un ou plusieurs serveurs au sein d'un réseau.

On entend par « un client applicatif est hébergé sur un équipement utilisateur », que le client applicatif est implémenté sur l'équipement utilisateur.

Chaque client applicatif 202 est configuré pour envoyer des requêtes ou des demandes à des serveurs et obtenir des informations en provenance des serveurs.

Le système 200 comporte également quatre serveurs : un serveur de gestion d'identité 203, un serveur de gestion de configuration 204, un serveur de gestion de groupes multimédias 205 et un serveur de gestion de clés de chiffrement 208.

Le serveur de gestion d'identité 203 est configuré pour recevoir et traiter des requêtes d'authentification envoyées par les clients applicatifs 202, pour chercher des informations d'authentification dans une base de données d'utilisateurs 206 appartenant au système 200 et pour allouer un identifiant de repli unique à chaque utilisateur dont la requête d'authentification est rejetée.

Le serveur de gestion de configuration 204 est configuré pour recevoir une requête de profil utilisateur de repli et envoyer un profil utilisateur de repli à chaque client applicatif 202 correspondant à un utilisateur dont la requête d'authentification est rejetée.

Le serveur de gestion de groupes multimédias 205 est configuré pour recevoir une requête de profils de groupe multimédia de repli et envoyer au moins un profil de groupe multimédia de repli à chaque client applicatif 202 correspondant à un utilisateur dont la requête d'authentification est rejetée.

Le serveur de gestion de clés de chiffrement 208 est configuré pour recevoir une requête de clés de chiffrement de groupe multimédia de repli et de clés de chiffrement des communications privées et envoyer au moins une clé de chiffrement de groupe multimédia de repli et une clé de chiffrement des communications privées à chaque client applicatif 202 correspondant à un utilisateur dont la requête d'authentification est rejetée.

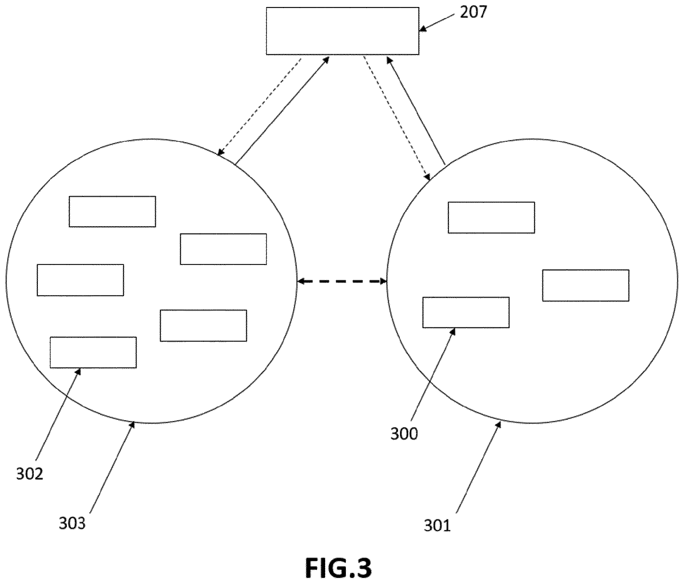

Le système 200 comporte également un administrateur opérationnel 207 dont le rôle est illustré à la figure 3, configuré d'une part, pour surveiller l'activité des membres dans chaque groupe multimédia de repli 301 et pour établir une communication avec des utilisateurs authentifiés en mode repli au besoin et configuré d'autre part, pour établir une communication entre les membres d'un groupe multimédia de repli 301 et les membres d'un groupe multimédia nominal 303 et pour établir une communication entre un utilisateur authentifié en mode repli et un utilisateur authentifié en mode nominal.

En effet, les membres d'un groupe multimédia de repli 301 sont tous des utilisateurs 300 authentifiés en mode repli et les membres d'un groupe multimédia nominal 303 sont tous des utilisateurs 302 authentifiés en mode nominal de manière que les utilisateurs 302 authentifiés en mode nominal ne puissent pas communiquer avec les utilisateurs 300 authentifiés en mode repli sans intervention de l'administrateur opérationnel 207.

Ainsi, sur la figure 3, les flèches pleines entre chaque groupe multimédia 301, 303 et l'administrateur opérationnel 207 correspondent à la surveillance de chaque groupe multimédia 301, 303 par l'administrateur opérationnel 207 et les flèches en pointillés à l'établissement éventuel d'une communication entre chaque groupe multimédia 301, 303 et l'administrateur opérationnel 207.

La flèche en pointillés entre le groupe multimédia nominal 303 comportant cinq utilisateurs 302 authentifiés en mode nominal et le groupe multimédia de repli 301 comportant trois utilisateurs 300 authentifiés en mode repli correspond à l'établissement éventuel de la communication entre le groupe multimédia de repli 301 et le groupe multimédia nominal 303.

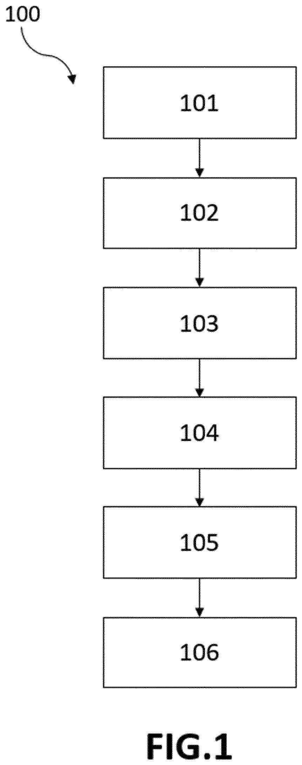

Le procédé 100 selon un premier aspect de l'invention comporte plusieurs étapes dont l'enchaînement est représenté à la figure 1.

Lors d'une première étape 101 du procédé 100, un utilisateur 300, 302 disposant d'un équipement utilisateur 201 hébergeant un client applicatif 202 envoie une demande ou requête d'authentification à un serveur de gestion d'identité 203 par le biais du client applicatif 202.

L'équipement utilisateur 201 est par exemple un smartphone, une tablette ou encore un ordinateur portable. De manière générale, l'équipement utilisateur 201 dispose d'un écran.

La requête d'authentification envoyée par le client applicatif 202 est alors traitée par le serveur de gestion d'identité 203.

Cette étape de traitement comporte par exemple plusieurs sous-étapes :
- une première sous-étape de réception de la requête d'authentification envoyée par le client applicatif 202 par le serveur de gestion d'identité 203 ;
- une deuxième sous-étape d'envoi d'une demande d'au moins une information d'authentification à l'utilisateur 300, 302 par le serveur de gestion d'identité 203 et de réception de la demande par l'équipement utilisateur 201 ;
- une troisième sous-étape de fourniture de l'information d'authentification demandée, par l'utilisateur 300, 302 en utilisant l'équipement utilisateur 201 ;
- une quatrième sous-étape d'envoi de l'information d'authentification fournie par l'utilisateur 300, 302 par le client applicatif 202 au serveur de gestion d'identité 203 et de réception de l'information d'authentification par le serveur de gestion d'identité 203 ;
- une cinquième sous-étape de parcours d'une base de données d'utilisateurs 206 par le serveur de gestion d'identité 203 pour déterminer si la base de données d'utilisateurs 206 contient ou non l'information d'authentification.

A l'issue de la cinquième sous-étape, si le serveur de gestion d'identité 203 n'a pas trouvé l'information d'authentification, la requête d'authentification est rejetée. Au contraire, si le serveur de gestion d'identité 203 a trouvé l'information d'authentification, la requête d'authentification est acceptée.

Le serveur de gestion d'identité 203 utilise ainsi un protocole standard pour l'authentification, comme par exemple le protocole OpenIDConnect développé dans la norme 3GPP pour le « Mission Critical Services » ou MCS.

L'information d'authentification est par exemple un mot de passe et/ou un nom d'utilisateur et/ou une donnée biométrique.

La base de données d'utilisateurs 206 est par exemple une base d'identifiants qui met en relation l'information d'authentification avec un identifiant correspondant.

Dans le cas où la requête d'authentification est acceptée, l'identifiant correspondant à l'information d'authentification de l'utilisateur 302 est envoyé au client applicatif 202. Grâce à l'identifiant, l'utilisateur 302 accède à son profil utilisateur, à ses profils et ses clés de chiffrement de groupe, à ses clés de chiffrement des communications privées, à ses groupes multimédias et plus généralement à toutes les informations liées à l'utilisateur 302. L'utilisateur 302 peut alors se connecter en « mode nominal » c'est-à-dire que l'utilisateur 302 peut avoir accès à tout ce qui a été défini lors de précédentes connexions par lui-même ou par un administrateur. L'utilisateur 302 a alors accès à des services de communication de groupe nominaux proposés par les groupes multimédias nominaux 303 auxquels il a accès pour communiquer avec les autres membres de chaque groupe multimédia nominal 303 et à des services de communications privées pour communiquer avec un unique autre utilisateur.

La connexion en mode nominal est le cas le plus courant qui se produit, soit quand la communication est maintenue avec le réseau central et que l'utilisateur 302 ne fournit pas d'informations d'authentification erronées, soit quand la communication est perdue avec le réseau central et que l'information d'authentification fournie par l'utilisateur 302 se trouve dans la base de données d'utilisateurs 206 locale utilisée dans la procédure de repli. Cette dernière situation est très rare puisque la base de données d'utilisateurs 206 locale contient peu d'informations et en pratique, quand la communication est perdue avec le réseau central, la majorité des utilisateurs ne peuvent pas se connecter en mode nominal.

La deuxième étape 102 du procédé 100 correspond au cas où la requête d'authentification est rejetée. Si le serveur de gestion d'identité autorise le mode repli, une troisième étape 103 du procédé 100 est alors effectuée. En effet, le serveur de gestion d'identité peut être capable de mettre en œuvre le procédé 100 selon l'invention et pour autant ne pas le mettre en œuvre si le serveur de gestion d'identité n'autorise pas le mode repli.

Lors de la troisième étape 103 du procédé 100, un identifiant de repli est attribué à l'utilisateur 300 par le serveur de gestion d'identité 203 et envoyé au client applicatif 202 correspondant. L'identifiant de repli attribué est unique, c'est-à-dire que l'identifiant de repli ne sera alloué à aucun autre utilisateur 300, 302.

L'identifiant de repli peut être propre à l'utilisateur. Dans ce cas, l'identifiant de repli est associé à l'information d'authentification fournie par l'utilisateur 300 lors de l'étape 102 de traitement de la requête d'authentification. Ainsi, si un identifiant de repli est attribué à un utilisateur 300 lors d'une première connexion en mode repli et que l'utilisateur 300 se reconnecte ultérieurement, le même identifiant de repli lui est attribué.

L'identifiant de repli est alloué de manière dynamique par le serveur de gestion d'identité 203. Le serveur de gestion d'identité 203 alloue donc l'identifiant de repli au cours du procédé, c'est-à-dire que l'identifiant de repli n'est pas prévu à l'avance.

Lors d'une quatrième étape 104 du procédé 100, l'identifiant de repli est utilisé pour obtenir un profil utilisateur de repli. En effet, le client applicatif 202 envoie une requête de profil utilisateur de repli à un serveur de gestion de configuration 204, la requête de profil utilisateur de repli comportant l'identifiant de repli. Le client applicatif 202 reçoit alors en retour le profil utilisateur de repli correspondant à l'identifiant de repli.

L'utilisateur 300 est alors authentifié en mode repli. L'utilisateur 300 peut alors être informé qu'il est en mode repli, par exemple par un affichage de l'identifiant de repli sur l'écran de l'équipement utilisateur 201.

Le profil utilisateur de repli peut comporter une liste d'identifiants de groupe multimédia de repli correspondant aux groupes multimédias de repli auxquels son profil utilisateur de repli lui donne accès.

Lors d'une cinquième étape 105 du procédé 100, le client applicatif 202 envoie une requête de profils de groupe multimédia de repli à un serveur de gestion de groupes multimédias 205, la requête de profils de groupe multimédia de repli comportant l'identifiant de repli. Le client applicatif 202 reçoit alors en retour le profil de groupe multimédia de repli associé à chaque identifiant de groupe multimédia de repli de la liste d'identifiants de groupe multimédia de repli.

Lors d'une sixième étape 106 du procédé 100, le client applicatif 202 envoie une requête de clés de chiffrement de groupe multimédia de repli et de clés de chiffrement des communications privées à un serveur de gestion de clés de chiffrement 208, la requête de clés de chiffrement de clés de chiffrement de groupe multimédia de repli et de clés de chiffrement des communications privées comportant l'identifiant de repli. Le client applicatif 202 reçoit alors en retour la clé de chiffrement de groupe multimédia de repli à chaque identifiant de groupe multimédia de repli de la liste d'identifiants de groupe multimédia de repli et la ou les clés de chiffrement des communications privées associée(s) à l'identifiant de repli.

Les clés de chiffrement sont indispensables à la protection des données échangées, permettant le chiffrage bout en bout, c'est-à-dire d'utilisateur à utilisateur des données échangées. Ainsi, une clé de chiffrement de groupe multimédia de repli permet de crypter et décrypter les données échangées au sein d'un groupe multimédia de repli pour que seuls les membres du groupe multimédia de repli puissent accéder à ces données. Une clé de chiffrement des communications privées permet de crypter et décrypter les données qu'un utilisateur donné va échanger avec un autre utilisateur donné. Ainsi, si un individu extérieur ne possédant pas la clé de chiffrement récupère des données, celles-ci seront cryptées et donc inintelligibles.

Une fois que le client applicatif 202 a reçu le profil utilisateur de repli, le ou les profils de groupes multimédias de repli, la ou les clefs de chiffrement de groupe multimédia de repli et la ou les clefs de chiffrement des communications privées, le client applicatif 202 possède tous les éléments de configuration lui permettant d'accéder aux services de repli de communication de groupe proposés par chaque groupe multimédia de repli dont il a obtenu le profil et aux services de repli de communications privées.

Le profil utilisateur de repli est donc associé à un certain nombre de groupes multimédias de repli 301 auxquels l'utilisateur a accès une fois que les profils de groupe multimédia de repli correspondants et les clés de chiffrement sont obtenus.

Chaque groupe multimédia de repli 301 propose des services de repli de communication de groupe, permettant à l'utilisateur 300 de communiquer avec les autres membres du groupe multimédia de repli 301.

Quand les membres d'un groupe multimédia de repli 301 communiquent entre eux, comme dans le cas d'un appel de groupe par « Push-To-Talk » ou PTT, chaque membre est par exemple identifié grâce à son identifiant de repli qui est transmis et affiché sur l'écran de l'équipement utilisateur 201 de chaque membre du groupe multimédia de repli 301. Cela peut également être le cas dans le cadre d'une communication privée entre deux utilisateurs authentifiés en mode repli.

Les services de communication de repli sont par exemple l'audio, la vidéo, la messagerie ou encore la localisation.

Le choix des services de communication de repli ainsi que les groupes multimédias de repli auxquels l'utilisateur a accès peuvent être choisis par l'opérateur du réseau de communication.

Les membres d'un groupe multimédia de repli 301 sont tous des utilisateurs 300 authentifiés en mode repli. De même, les membres d'un groupe multimédia nominal 303 sont tous des utilisateurs 302 authentifiés en mode nominal. Ainsi, les utilisateurs 302 authentifiés en mode nominal ne peuvent pas communiquer avec les utilisateurs 300 authentifiés en mode repli sans l'intervention de l'administrateur opérationnel 207.

## Revendications

1. Procédé (100) de configuration pour un accès par un utilisateur (300, 302) à des services de repli de communication accessibles via un réseau de transport, les services de repli permettant d'offrir un service de communication minimum à l'utilisateur (300, 302) quand le réseau de transport a perdu la communication avec un réseau central correspondant, l'accès aux services de repli de communication nécessitant une authentification, le procédé comporte les étapes suivantes :
- un client applicatif (202) hébergé sur un équipement utilisateur (201) envoie une requête d'authentification à un serveur de gestion d'identité (203), (101) ;
- en cas de rejet de la requête d'authentification par le serveur de gestion d'identité (203), (102) :
• le serveur de gestion d'identité (203) alloue un identifiant de repli unique à l'utilisateur (300) et envoie l'identifiant de repli au client applicatif (202), (103) ;
• le client applicatif (202) envoie une requête de profil utilisateur de repli comportant l'identifiant de repli à un serveur de gestion de configuration (204) et reçoit un profil utilisateur de repli correspondant envoyé par le serveur de gestion de configuration (204), l'utilisateur est alors authentifié « en mode repli » (104) ;
• le client applicatif (202) envoie une requête de profils de groupe multimédia de repli comportant l'identifiant de repli à un serveur de gestion de groupes multimédias (205) et reçoit au moins un profil de groupe multimédia de repli correspondant envoyé par le serveur de gestion de groupes multimédias (205), (105) ;
• le client applicatif (202) envoie une requête de clés de chiffrement de groupe multimédia de repli et de clés de chiffrement des communications privées comportant l'identifiant de repli à un serveur de gestion de clés de chiffrement (208) et reçoit au moins une clé de chiffrement de groupe multimédia de repli et au moins une clé de chiffrement des communications privées correspondantes envoyées par le serveur de gestion de clés de chiffrement (208) (106) ;
• une fois que le client applicatif (202) a reçu le profil utilisateur de repli, le ou les profils de groupes multimédias de repli, la ou les clés de chiffrement de groupe multimédia de repli et la ou les clés de chiffrement des communications privées, l'utilisateur peut accéder à des services de repli de communication, chaque groupe multimédia de repli (301) proposant des services de repli de communication de groupe, les membres d'un groupe multimédia de repli (301) étant tous des utilisateurs (300) authentifiés en « mode repli ».

2. Procédé (100) selon la revendication 1, **caractérisé en ce que** l'identifiant de repli est alloué de manière dynamique.

3. Procédé (100) selon l'une quelconque des revendications précédentes, **caractérisé en ce qu'**une fois que le serveur de gestion d'identité (203) a reçu la requête d'authentification envoyée par le client applicatif (202), le serveur de gestion d'identité (203) réalise une étape de traitement de la requête d'authentification comportant les sous-étapes suivantes :
• le serveur de gestion d'identité (203) demande au moins une information d'authentification à l'utilisateur (300, 302) ;
• l'utilisateur (300, 302) fournit l'information d'authentification demandée via l'équipement utilisateur (201) ;
• le client applicatif (202) envoie l'information d'authentification fournie par l'utilisateur (300, 302) au serveur de gestion d'identité (203) et le serveur de gestion d'identité (203) reçoit l'information d'authentification ;
• le serveur de gestion d'identité (203) parcourt une base de données d'utilisateurs (206) :
∘ si le serveur de gestion d'identité (203) ne trouve pas l'information d'authentification dans la base de données d'utilisateurs (206), la requête d'authentification est rejetée (102) ;
∘ si le serveur de gestion d'identité (203) trouve l'information d'authentification dans la base de données d'utilisateurs (206), la requête d'authentification est acceptée.

4. Procédé (100) selon la revendication 3, **caractérisé en ce que** l'identifiant de repli est associé à l'information d'authentification fournie par l'utilisateur (300).

5. Procédé (100) selon l'une quelconque des revendications précédentes, **caractérisé en ce qu'**en cas d'acceptation de la requête d'authentification par le serveur de gestion d'identité (203), l'utilisateur (302) est authentifié en « mode nominal » dans lequel il a accès à un profil utilisateur nominal et à des groupes multimédias nominaux (303) que l'utilisateur (302) a définis lui-même lors de précédentes connexions ou qu'un administrateur a défini pour lui.

6. Procédé (100) selon la revendication 5, **caractérisé en ce que** les utilisateurs (302) authentifiés en « mode nominal » et les utilisateurs (300) authentifiés en « mode repli » ne peuvent pas communiquer entre eux.

7. Procédé (100) selon l'une quelconque des revendications précédentes, **caractérisé en ce que** chaque utilisateur (300) d'un groupe multimédia de repli (301) communique avec les autres utilisateurs (300) du groupe multimédia de repli (301).

8. Procédé (100) selon l'une quelconque des revendications précédentes, **caractérisé en ce que** l'utilisateur est informé qu'il est en « mode repli » par affichage de l'identifiant de repli sur un écran de l'équipement utilisateur.

9. Système (200) pour la mise en œuvre du procédé selon l'une quelconque des revendications 1 à 8 pour un accès par un utilisateur (300, 302) via un réseau de transport, à des services de repli de communication permettant d'offrir un service de communication minimum à l'utilisateur (300, 302) quand le réseau de transport a perdu la communication avec un réseau central correspondant, le système comporte :
- au moins un équipement utilisateur (201) utilisé par l'utilisateur (300, 302), ledit équipement utilisateur (201) hébergeant un client applicatif (202) configuré pour envoyer des requêtes à des serveurs et obtenir des informations en provenance des serveurs ;
- au moins une base de données d'utilisateurs (206) ;
- au moins un serveur de gestion d'identité (203) configuré pour recevoir et traiter une requête d'authentification envoyée par un client applicatif (202), pour chercher des informations d'authentification dans une base de données d'utilisateurs (206) et pour allouer un identifiant de repli unique à un utilisateur (300) en cas de rejet de la requête d'authentification ;
- au moins un serveur de gestion de configuration (204) configuré pour recevoir une requête de profil utilisateur de repli comportant l'identifiant de repli et envoyer un profil utilisateur de repli à un client applicatif (202) ;
- au moins un serveur de gestion de groupes multimédias (205) configuré pour recevoir une requête de profils de groupe multimédia de repli comportant l'identifiant de repli et envoyer au moins un profil de groupe multimédia de repli à un client applicatif (202), chaque groupe multimédia de repli (301) proposant des services de repli de communication de groupe, les membres d'un groupe multimédia de repli (301) étant tous des utilisateurs (300) ayant reçu un profil utilisateur de repli envoyé par le serveur de gestion de configuration (204);
- au moins un serveur de gestion de clés de chiffrement (208) configuré pour recevoir une requête de clés de chiffrement de groupe multimédia de repli et de clés de chiffrement des communications privées et envoyer au moins une clé de chiffrement de groupe multimédia de repli et une clé de chiffrement des communications privées à un client applicatif (202).

10. Système (200) selon la revendication 9, **caractérisé en ce qu'**il comporte un administrateur opérationnel (207) configuré pour surveiller, sur les groupes multimédias de repli (301), l'activité des utilisateurs (300) ayant reçu un profil utilisateur de repli envoyé par le serveur de gestion de configuration, ces utilisateurs sont alors authentifiés en « mode repli », pour établir une communication avec des utilisateurs (300) authentifiés en « mode repli » et pour mettre en relation des utilisateurs (300) authentifiés en « mode repli » avec des utilisateurs authentifiés (302) en un « mode nominal ».

11. Programme d'ordinateur comprenant des instructions de code de programme pour l'exécution des étapes du procédé selon l'une quelconque des revendications 1 à 8 lorsque ledit programme est exécuté sur un ordinateur.

12. Equipement utilisateur (201) comportant des moyens pour mettre en œuvre le procédé selon l'une quelconque des revendications 1 à 8.

## Patentansprüche

1. Konfigurationsverfahren (100) für einen Zugang zu Kommunikations-Ausweichdiensten durch einen Nutzer (300, 302), die über ein Beförderungsnetz zugänglich sind, wobei die Ausweichdienste das Anbieten eines Mindest-Kommunikationsdienstes für den Nutzer (300, 302) zulassen, wenn das Beförderungsnetz die Kommunikation mit einem entsprechenden zentralen Netz verloren hat, wobei der Zugang zu den Kommunikations-Ausweichdiensten eine Authentifizierung erfordert, wobei das Verfahren die folgenden Schritte umfasst:
― ein Anwendungs-Client (202), der auf einer Nutzerausrüstung (201) untergebracht ist, sendet eine Authentifizierungsanfrage an einen Identitätsverwaltungs-Server (203), (101);
― bei einer Ablehnung der Authentifizierungsanfrage durch den Identitätsverwaltungs-Server (203), (102):
• teilt der Identitätsverwaltungs-Server (203) dem Nutzer (300) eine einzigartige Ausweichkennung zu und sendet die Ausweichkennung an den Anwendungs-Client (202), (103);
• sendet der Anwendungs-Client (202) eine Ausweichnutzer-Profilanfrage mit der Ausweichkennung an einen Konfigurationsverwaltungs-Server (204) und empfängt ein entsprechendes Ausweichnutzer-Profil, das vom Konfigurationsverwaltungs-Server (204) gesendet wird, dann ist der Nutzer "im Ausweichmodus" authentifiziert (104);
• sendet der Anwendungs-Client (202) eine Anfrage nach Ausweichmultimedien-Gruppenprofilen mit der Ausweichkennung an einen Multimediengruppen-Verwaltungsserver (205) und empfängt wenigstens ein entsprechendes Ausweichmultimedien-Gruppenprofil, das vom Multimediengruppen-Verwaltungsserver (205) gesendet wird (105);
• sendet der Anwendungs-Client (202) eine Anfrage nach Ausweichmultimedien-Gruppenchiffrierungsschlüsseln und Chiffrierungsschlüsseln für private Kommunikationen, die die Ausweichkennung umfassen, an einen Chiffrierungsschlüssel-Verwaltungsserver (208) und empfängt wenigstens einen Ausweichmultimediengruppen-Chiffrierungsschlüssel und wenigstens einen Chiffrierungsschlüssel der entsprechenden privaten Kommunikationen, die vom Chiffrierungsschlüssel-Verwaltungsserver (208) gesendet werden (106);
• sobald der Anwendungs-Client (202) das Ausweichnutzer-Profil, das oder die Ausweichmultimedien-Gruppenprofil(e), den oder die Ausweichmultimedien-Gruppenchiffrierungsschlüssel und den oder die Chiffrierungsschlüssel der privaten Kommunikationen empfangen hat, kann der Nutzer auf die Kommunikations- Ausweichdiensten zugreifen, wobei jede Ausweichmultimedien-Gruppe (301) Gruppenkommunikations-Ausweichdienste vorschlägt, wobei die Mitglieder einer Ausweichmultimedien-Gruppe (301) alle im "Ausweichmodus" authentifizierte Nutzer (300) sind.

2. Verfahren (100) gemäß Anspruch 1, **dadurch gekennzeichnet, dass** die Ausweichkennung dynamisch zugeteilt wird.

3. Verfahren (100) gemäß irgendeinem der voranstehenden Ansprüche, **dadurch gekennzeichnet, dass**, nachdem der Identitätsverwaltungs-Server (203) die vom Anwendungs-Client (202) gesendete AuthentifizierungsAnfrage empfangen hat, der Identitätsverwaltungs-Server (203) einen Verarbeitungsschritt der Authentifizierungsanfrage durchführt, der die folgenden Teilschritte umfasst:
• Der Identitätsverwaltungs-Server (203) fragt wenigstens eine Authentifizierungsinformation beim Nutzer (300, 302) an;
• Der Nutzer (300, 302) liefert die angefragte Authentifizierungsinformation über die Nutzerausrüstung (201);
• Der Anwendungs-Client (202) sendet die vom Nutzer (300, 302) gelieferte Authentifizierungsinformation an den Identitätsverwaltungs-Server (203) und der Identitätsverwaltungs-Server (203) empfängt die Authentifizierungsinformation;
• Der Identitätsverwaltungs-Server (203) durchläuft eine Nutzer-Datenbank (206):
∘ Wenn der Identitätsverwaltungs-Server (203) keine Authentifizierungsinformation in der Nutzer-Datenbank (206) findet, wird die Authentifizierungsanfrage abgelehnt (102);
∘ Wenn der Identitätsverwaltungs-Server (203) die Authentifizierungsinformation in der Nutzer-Datenbank (206) findet, wird die Authentifizierungsanfrage angenommen.

4. Verfahren (100) gemäß Anspruch 3, **dadurch gekennzeichnet, dass** die Ausweichkennung der vom Nutzer (300) gelieferten Authentifizierungsinformation entspricht.

5. Verfahren (100) gemäß einem der voranstehenden Ansprüche, **dadurch gekennzeichnet, dass** bei einer Annahme der Authentifizierungsanfrage durch den Identitätsverwaltungs-Server (203) der Nutzer (302) im "nominalen Modus" authentifiziert wird, in dem er Zugriff auf ein nominales Nutzerprofil und auf nominale Multimediengruppe (303) hat, die der Nutzer (302) bei vorherigen Verbindungen selbst definiert hat oder die ein Administrator für ihn definiert hat.

6. Verfahren (100) gemäß Anspruch 5, **dadurch gekennzeichnet, dass** die im "nominalen Modus" authentifizierten Nutzer (302) und die im "Ausweichmodus" authentifizierten Nutzer (300) nicht miteinander kommunizieren können.

7. Verfahren (100) gemäß irgendeinem der voranstehenden Ansprüche, **dadurch gekennzeichnet, dass** jeder Nutzer (300) einer Ausweichmultimedien-Gruppe (301) mit den anderen Nutzern (300) der Ausweichmultimedien-Gruppe (301) kommuniziert.

8. Verfahren (100) gemäß irgendeinem der voranstehenden Ansprüche, **dadurch gekennzeichnet, dass** der Nutzer durch die Anzeige der Ausweichkennung auf dem Bildschirm der Nutzerausrüstung informiert wird, dass er im "Ausweichmodus" ist.

9. System (200) zum Umsetzen des Verfahrens gemäß irgendeinem der Ansprüche 1 bis 8 für einen Zugriff auf Kommunikationsausweichdienste durch einen Nutzer (300, 302) über ein Beförderungsnetz, die das Anbieten eines Mindest-Kommunikationsdienstes für den Nutzer (300, 302) ermöglichen, wenn das Beförderungsnetz die Kommunikation mit einem entsprechenden zentralen Netz verloren hat, wobei das System umfasst:
― wenigstens eine Nutzerausrüstung (201), die vom Nutzer 300, 302) verwendet wird, wobei die genannte Nutzerausrüstung (201) einen Anwendungs-Client (202) beherbergt, der zum Senden der Anfragen an Server und zum Erhalten der Informationen von den Servern konfiguriert ist;
― wenigstens eine Nutzer-Datenbank (206);
― wenigstens einen Identitätsverwaltungs-Server (203), der zum Empfangen und Verarbeiten einer Authentifizierungsanfrage konfiguriert ist, die von einem Anwendungs-Client (202) gesendet wird, um Authentifizierungsinformationen in einer Nutzerdaten-Bank (206) zu suchen und um einem Nutzer (300) im Ablehnungsfall der Authentifizierungsanfrage eine einzigartige Ausweichkennung zuzuordnen;
― wenigstens einen Konfigurationsverwaltungs-Server (204), der zum Empfangen einer Anfrage eines Ausweich-Nutzerprofils, das die Ausweichkennung umfasst, und zum Senden eines Ausweich-Nutzerprofils an einen Anwendungs-Client (202) konfiguriert ist;
― wenigstens einen Multimediengruppen-Verwaltungsserver (205), der zum Empfangen einer Anfrage nach Ausweichmultimedien-Gruppenprofilen, umfassend die Ausweichkennung, und zum Senden wenigstens eines Ausweichmultimedien-Gruppenprofils an einen Anwendungs-Server (202) konfiguriert ist, wobei jede Ausweichmultimedien-Gruppe (301) Gruppenkommunikations-Ausweichdienste vorschlägt, wobei die Mitglieder einer Ausweichmultimedien-Gruppe (301) alles Nutzer (300) sind, die ein Ausweichnutzer-Profil empfangen haben, das vom Konfigurationsverwaltungs-Server (204) gesendet wird;
― wenigstens einen Chiffrierungsschlüssel-Verwaltungsserver (208), der zum Empfangen einer Anfrage nach Ausweichmultimedien-Gruppenchiffrierungsschlüsseln und von Chiffrierungsschlüsseln der privaten Kommunikationen und zum Senden wenigstens eines Ausweichmultimedien-Gruppenchiffrierungsschlüssels und einem Chiffrierungsschlüssel der privaten Kommunikationen an einen Anwendungs-Client (202) konfiguriert ist.

10. System (100) gemäß Anspruch 9, **dadurch gekennzeichnet, dass** es einen betrieblichen Administrator (207) umfasst, der konfiguriert ist, um in den Ausweichmultimedien-Gruppen (301) die Aktivität der Nutzer (300) zu überwachen, die ein Ausweich-Nutzerprofil empfangen haben, das vom Konfigurationsverwaltungs-Server gesendet ist, wobei diese Nutzer dann im "Ausweichmodus" authentifiziert sind, um eine Kommunikation mit authentifizierten Nutzern (300) im "Ausweichmodus" aufzubauen und um im "Ausweichmodus" authentifizierte Nutzer (300) mit in einem "nominalen Modus" authentifizierten Nutzern (302) in Verbindung zu bringen.

11. Computerprogramm, umfassend Programmcode-Anweisungen für die Ausführung der Schritte des Verfahrens gemäß irgendeinem der Ansprüche 1 bis 8, wenn das genannte Programm auf einem Computer ausgeführt wird.

12. Nutzerausrüstung (201), umfassend Mittel zum Umsetzen des Verfahrens gemäß irgendeinem der Ansprüche 1 bis 8.

## Claims

1. Method (100) for configuring access by a user (300, 302) to fallback communication services accessible via a transport network, the fallback services providing a minimum communication service to the user (300, 302) when the transport network has lost communication with a corresponding core network, the access to the fallback communication services requiring an authentication, the method comprises the following steps:
- an application client (202) hosted on a user equipment (201) sends an authentication request to an identity management server (203), (101);
- in the event of rejection of the authentication request by the identity management server (203), (102):
• the identity management server (203) allocates a unique fallback identifier to the user (300) and sends the fallback identifier to the application client (202), (103);
• the application client (202) sends a request for fallback user profile comprising the fallback identifier to a configuration management server (204) and receives a corresponding fallback user profile sent by the configuration management server (204), the user is then authenticated in "fallback mode" (104);
• the application client (202) sends a request for fallback multimedia group profiles comprising the fallback identifier to a multimedia group management server (205) and receives at least one corresponding fallback multimedia group profile sent by the multimedia group management server (205), (105);
• the application client (202) sends a request for fallback multimedia group encryption keys and private communications encryption keys comprising the fallback identifier to an encryption keys management server (208) and receives at least one fallback multimedia group encryption key and at least one corresponding private communications encryption key sent by the encryption keys management server (208) (106);
• once the application client (202) has received the fallback user profile, the fallback multimedia group profile(s), the fallback multimedia group encryption key(s) and the private communications encryption key(s), the user can access the fallback communication services, each fallback multimedia group (301) providing group communication fallback services, wherein the members of a fallback multimedia group (301) are all authenticated "fallback mode" users (300).

2. Method (100) according to claim 1, **characterised in that** the fallback identifier is allocated dynamically.

3. Method (100) according to any of the preceding claims, **characterised in that** once the identity management server (203) has received the authentication request sent by the application client (202), the identity management server (203) carries out a step of processing the authentication request comprising the following sub-steps:
• the identity management server (203) requests at least one authentication information from the user (300, 302);
• the user (300, 302) supplies the requested authentication information via the user equipment (201);
• the application client (202) sends the authentication information supplied by the user (300, 302) to the identity management server (203) and the identity management server (203) receives the authentication information;
• the identity management server (203) browses a database of users (206):
∘ if the identity management server (203) does not find the authentication information in the database of users (206), the authentication request is rejected (102);
∘ if the identity management server (203) finds the authentication information in the database of users (206), the authentication request is accepted.

4. Method (100) according to claim 3, **characterised in that** the fallback identifier is associated with the authentication information supplied by the user (300).

5. Method (100) according to any of the preceding claims, **characterised in that** in the event of acceptance of the authentication request by the identity management server (203), the user (302) is authenticated in "nominal mode" in which he has access to a nominal user profile and to nominal multimedia groups (303) that the user (302) has defined himself during preceding connections or that an administrator has defined for him.

6. Method (100) according to claim 5, **characterised in that** users (302) authenticated in "nominal mode" and users (300) authenticated in "fallback mode" cannot communicate with each other.

7. Method (100) according to any of the preceding claims, **characterised in that** each user (300) of a fallback multimedia group (301) communicates with the other users (300) of the fallback multimedia group (301).

8. Method (100) according to any of the preceding claims, **characterised in that** the user is informed that he is in "fallback mode" by display of the fallback identifier on a screen of the user equipment.

9. System (200) for the implementation of the method according to any of claims 1 to 8 for access by a user (300, 302) via a transport network to fallback communication services providing a minimum communication service to the user (300, 302) when the transport network has lost communication with a corresponding core network, the system comprises:
- at least one user equipment (201) used by the user (300, 302), said user equipment (201) hosting an application client (202) configured to send requests to servers and to obtain information coming from the servers;
- at least one database of users (206);
- at least one identity management server (203) configured to receive and to process an authentication request sent by an application client (202), to search for authentication information in a database of users (206) and to allocate a unique fallback identifier to a user (300) in the event of rejection of the authentication request;
- at least one configuration management server (204) configured to receive a request for fallback user profile comprising the fallback identifier and to send a fallback user profile to an application client (202);
- at least one multimedia group management server (205) configured to receive a request for fallback multimedia group profiles comprising the fallback identifier and to send at least one fallback multimedia group profile to an application client (202), each fallback multimedia group (301) providing group communication fallback services, wherein the members of a fallback multimedia group (301) being all users (300) having received a fallback user profile sent by the configuration management server (204);
- at least one encryption keys management server (208) configured to receive a request for fallback multimedia group encryption keys and private communications encryption keys and to send at least one fallback multimedia group encryption key and one private communications encryption key to an application client (202).

10. System (200) according to claim 9, **characterised in that** it comprises an operational administrator (207) configured to monitor, on the fallback multimedia groups (301), the activity of users (300) having received a fallback user profile sent by the configuration management server, these users being then authenticated in "fallback mode", to establish communication with users (300) authenticated in "fallback mode" and to link up users (300) authenticated in "fallback mode" with users authenticated (302) in a "nominal mode".

11. Computer program comprising program code instructions for performing the steps of the process according to any of claims 1 to 8 when said program is executed on a computer.

12. User equipment (201) comprising means for implementing the method according to any of claims 1 to 8.
